# EUROPEAN PATENT SPECIFICATION

(11) **EP 0 665 206 B1**
(45) Date of publication and mention of the grant of the patent: **07.01.1998**
(21) Application number: 95200187.3
(22) Date of filing: 26.01.1995
(51) Int. Cl.: C07C 41/03, C08G 65/28

(54) **Alkoxylation process**
Alkoxylierungsverfahren
Procédé d'alcoxylation

(30) Priority: 31.01.1994 EP 94200256
(43) Date of publication of application: 02.08.1995
(73) Proprietor: SHELL INTERNATIONALE RESEARCH MAATSCHAPPIJ B.V., 2596 HR Den Haag (NL)
(72) Inventor: Breukel, Bertus Jan, NL-1031 CM Amsterdam (NL); Gerard, Eric-Jack, NL-1031 CM Amsterdam (NL)

(56) References cited:
- EP-A- 0 398 450
- EP-A- 0 490 444
- WO-A-91/12220
- WO-A-92/17429

## Description

The invention relates to an alkoxylation process for preparing alkyleneoxide adducts of active hydrogen-containing compounds.

Many of these alkyleneoxide adducts are of established commercial utility and, depending on their specific properties, may be employed, for example, in detergent compositions for use in industry and in the home, as solvents, lubricants, wetting or emulsifying agents or as intermediates for preparing polyurethane products.

The adducts are usually prepared by reacting one or more alkyleneoxide molecules with a molecule of an active hydrogen-containing compound in the presence of a suitable catalyst. An illustration of the conventional preparation of an alkyleneoxide adduct, by addition of a number of alkyleneoxide molecules to a single molecule of an active hydrogen-containing compound, in casu an alcohol, is presented by the following equation:

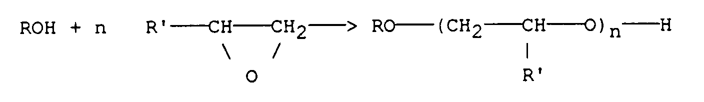

In this equation R represents an alkylgroup, R' represents a hydrogen atom or an alkylgroup and n indicates the adduct number.

A problem, encountered in many prior art processes of this type, consists in the relatively low production of the envisaged alkyleneoxide adducts, due to insufficient activity of the selected catalyst. In particular in the preparation of adducts of the above formula, wherein R' represents an alkylgroup, it has been observed that usually adducts are produced having relatively low adduct numbers "n" e.g. below 10. Also, time-yield values are often unsatisfactory as a result of the required induction period, before the reaction initiates.

Moreover, with most of the catalysts used in the known alkoxylation processes, side reactions occur which result in the formation of undesirable products, e.g. unsaturated compounds, formed by dehydration of intermediately formed allylcompounds.

Alkyleneoxide addition reactions are known to produce mixtures of various alkoxylate molecules having different numbers of oxyalkylene units, i.e. having different adduct numbers "n". The adduct number is a factor which in many respects controls the properties of the alkoxylate molecules and it is therefore desirable, for each intended use, to produce a mixture of alkoxylate molecules having adduct numbers within a relatively narrow range. It has been observed that with many catalysts, used in prior art processes, in particular with alkaline catalysts such as potassiumhydroxide, a broad range of alkyleneoxide adducts is produced.

Accordingly, much effort has been made to find more active and more selective catalysts which can be used to produce at adequate rate, an alkyleneoxide adduct mixture in which a relatively large proportion of the alkoxylate molecules have an adduct number "n" within a relatively narrow range.

In US Patent Specification 4,967,016 a process for the preparation of alkyleneoxide adducts of active hydrogen-containing organic compounds is disclosed whereby a catalyst is used comprising a catalytically effective amount of bariumphosphate. The preparation of this catalyst is performed by neutralization of bariumhydroxide or bariumoxide with phosphoric acid in an aqueous medium. Typically, diluted phosphoric acid is added to an aqueous solution of bariumhydroxide. The formed suspension is filtered and the resulting solid (crystalline Ba₃(PO₄)₂) is washed with water and dried. Subsequently, the dried bariumphosphate is used as catalyst in an alkoxylation process, exemplified by ethyleneoxide as alkyleneoxide.

It has now been found that the use of a bariumphosphate catalyst which has been activated before use, results in a significant increase in reaction rate and a reduction in induction period.

The present invention relates to a process for the preparation of alkyleneoxide adducts of active hydrogen-containing organic compounds by reaction of a compound having a vicinal oxide group with a compound containing at least one active hydrogen atom, in the presence of a catalyst obtainable by an activation treatment comprising treating with an alkali hydroxide solution.

Suitable compounds having a vicinal oxide (epoxide) group include vicinal alkyleneoxides, in particular the lower alkyleneoxides with 2 to 4 carbon atoms per molecule. Preferably, the epoxide group is at a terminal position such as in ethyleneoxide or propyleneoxide, but non-terminal alkyleneoxides, such as 2,3-epoxybutane are not excluded.

In the process of the invention, a preferred vicinal alkyleneoxide is propyleneoxide which can be converted in good yield into various polyether polyols having molecular weights within selected narrow ranges.

If desired, mixtures of alkyleneoxides may be used, for example a mixture of propyleneoxide and ethyleneoxide.

Suitable compounds containing at least one active hydrogen atom include alcohols, thiols, phenols, carboxylic acids, amines of sufficient acidity and water.

Preference generally exists for hydroxyl-containing reactants, in particular monohydric or polyhydric alcohols. They may contain linear or branched carbon chains in their molecules, which chains may be interrupted by one or more hetero-atoms such as oxygen atoms.

Examples of suitable active hydrogen-containing compounds are lower alcohols such as propanol, butanol and hexanol, higher alcohols such as octanol, decanol, or mixtures of alcohols having from 8 to 20 carbon atoms such as mixtures of C₉, C₁₀ and C₁₁ alcohols, or mixtures of C₁₂, C₁₃, C₁₄ and C₁₅ alcohols, dihydric alcohols such as alkylene glycols, e.g. ethylene glycol, propylene glycol, hexylene glycol, polyols such as glycerol and pentaerythritol, polyalkylene glycolethers such as diethylene glycol, triethylene glycol, propylene glycol, dipropylene glycol, tripropylene glycol and polypropylene glycol, phenols such as phenol, p-methylphenol, octylphenol and decylphenol, diphenols such as resorcinol and diphenylol propane, alkanethiols such as 2-propanethiol, 2-butanethiol and 3-pentanethiol, mono- and dicarboxylic acids such as acetic acid, propionic acid, valeric acid, lauric acid, palmitic acid, caproic acid, steric acid, oleic acid, benzoic acid, toluic acid, terephthalic acid and maleic acid, tertiary alkylamines and hydroxyl-containing amines such as N,N-diethylethanolamine and tripropanolamine.

Preferably, a di- or polyhydric alcohol or a glycolether is used, in particular glycerol or polypropylene glycol. These compounds have proved to be in particular suitable for preparing alkyleneoxide adducts of which the adduct numbers are within a selected, relatively narrow range. Thus, dihydric and polyhydric alcohols and glycolethers have been advantageously used for preparing alkyleneoxide adducts having adduct numbers in the range of 20 to 40, or alkyleneoxide adducts having adduct numbers in the range of 80 to 100.

The process according to the present invention is of particular interest for preparing polyols by reacting propyleneoxide with a polypropylene glycol. The resulting propyleneoxide adducts are eminently suitable as starting materials for the production of polyurethanes.

According to the invention, the process is carried out with a catalyst comprising bariumphosphate obtainable by an activation treatment comprising treating with an alkali hydroxide solution. If desired the catalyst may comprise in addition other materials, for example catalyst promoters or other catalytically active or substantially inert materials such as non-activated bariumphosphate or minor amounts of other barium compounds. However, it is preferred to use a catalyst essentially consisting of activated bariumphosphate. The amount of bariumphosphate present in the catalyst is preferably more than 80% by weight, based on total amount of catalyst, more preferably more than 85% by weight, more preferably more than 95% by weight. The amount of catalyst is not critical, but is usually selected such that the supplied quantity of activated bariumphosphate is in the range of 0.1 to 2% by weight, based on the amount of eventually produced alkyleneoxide adduct. Preferably the supplied quantity of activated bariumphosphate is in the range of 0.2 to 0.8% by weight on the same basis.

The reaction can be suitably carried out at elevated temperatures, generally being in the range of 90-200 °C. Advantageously, owing to the high activity of the activated bariumphosphate catalyst, reaction temperatures are used, which are significantly lower than those, usually applied in known alkoxylation processes. Thus, preferred reaction temperatures are selected in the range of 110-150 °C, most preferably in the range of 115-130 °C.

Atmospheric reaction pressures may be used but superatmospheric pressures are usually considered preferable, for example pressures between 1 and 20 bar a(bsolute), more preferably between 2 and 10 bar a.

The mechanism underlying the improved catalytic activity of the bariumphosphate catalyst, as a result of the activation treatment, is not fully understood. Conceivably, the activation affects the surface of the bariumphosphate. It is also possible that at least part of residual water contained in the structure of the catalyst is removed by the activation treatment.

According to a preferred embodiment of the process, the activation treatment is performed during the preparation of the catalyst.

The preparation of bariumphosphate intended to be used in the process of the invention, may be carried out in various ways.

Conveniently, an aqueous solution of bariumhydroxide is at least partly neutralized by addition of phoshoric acid, if desired diluted with water. In order to substantially avoid the formation of products other than bariumphosphate, such as bariumhydrogenphosphate or bariumoxide, it is recommended to add diluted phosphoric acid gradually with stirring to an aqueous solution of bariumhydroxide. Stirring is advantageously continued after completion of phosphoric acid addition, in order to promote formation of crystalline bariumphosphate. The product can suitably be recovered by precipitation, filtration, washing and drying.

An attractive procedure consists in effecting the activation treatment directly after formation of bariumphosphate occurs, i.e. before isolating bariumphosphate from the aqueous mixture in which it was formed.

In this embodiment the activation treatment preferably includes a step whereby bariumphosphate, directly after its formation, is contacted with an aqueous solution of an alkalihydroxide.

Suitable alkalihydroxides include the hydroxides of sodium, potassium, rubidium and cesium. Of these, sodiumhydroxide is in particular preferred.

The amount of alkalihydroxide solution added to the bariumphosphate-containing mixture may vary, but is preferably selected such that activated bariumphosphate is obtained as a precipitate in an essentially neutral medium. Hence, it is preferred to add an excess of phosphoric acid in the preparation of bariumphosphate, in order to obtain an essentially neutral medium containing activated bariumphosphate.

The activated bariumphosphate may be recovered by filtration followed by washing, e.g. with water, and drying, suitably at elevated temperature.

Preferably, the activated bariumphosphate, after washing with water, is subjected to a treatment with an organic solvent, before drying, in order to remove a substantial amount of washing liquid.

Suitable organic solvents for this purpose include aprotic polar solvents such as ethers, for example diethylether or tetrahydrofuran. Tetrahydrofuran is in particular preferred.

If desired, the activation treatment may also be effected after isolation of bariumphosphate from the reaction medium in which it has been prepared. In this mode of operation the amount of phosphoric acid, added during the preparation of bariumphosphate, advantageously corresponds to the stoichiometric amount required for obtaining an essentially neutral reaction medium.

After subjecting the isolated bariumphosphate to an activation treatment, such as a treatment with an aqueous solution of an alkalihydroxide, conveniently a washing and a drying step is effected, suitably in the manner as described above.

The activated bariumphosphate can be used as catalyst, both in batchwise and in continuous operation of the alkoxylation process. The invention is further illustrated by the following examples.

### Example 1

A 3-litre roundbottom reactor was charged with 2000 ml of water. Subsequently 0.9 mol of bariumhydroxide monohydrate (Ba(OH)₂. H₂O) was added and the temperature of the mixture was raised to 50 °C.

The mixture was filtered through a glass-filter and the temperature of the filtrate was again raised to 50 °C. During a period of 16 minutes under stirring, 0.66 mol of phosphoric acid (85% wt in water) was added. Subsequently, 0.352 mol of sodiumhydroxide in 30 ml of water was added and the mixture was stirred (200 rpm) during 2 hours.

The resulting mixture was split in three parts, each part being filtered through a glass-filter, washed with water (3 times, each time with 200 ml of water), washed with tetrahydrofuran (3 times, each time with 200 ml of tetrahydrofuran) and dried overnight at 100 °C under vacuum.

The activity of the obtained bariumphosphate catalyst for the preparation of polyetherpolyols was investigated in a 1 litre steel autoclave, fitted with a magnetic impeller stirrer and equipped with safety devices for high temperature and pressure conditions.

The autoclave was charged with 51.5 g of polypropylene glycol having a molecular weight of 400 g/mol (PPG 400) and 4 g of bariumphosphate catalyst, prepared as described above.

The autoclave was sealed and, after raising the temperature of its contents to 120 °C, evacuated during 30 minutes. After addition of nitrogen (1 bar), 748 g of propyleneoxide was pumped into the autoclave under pressure regulation (6 bar abs.) to yield a product with a targeted molecular weight of 6000 g/mol.

Subsequently the reaction was allowed to react down without further pressure regulation. The propoxylation time was approximately 100 minutes, the total batch time was 6 hours.

With propoxylation time is meant the time span between adding propylene oxide and obtaining the targeted product for the first time.

The volatiles were removed from the mixture at 120 °C under vacuum.

The product was worked-up by stirring the mixture with alkaline water, followed by filtration, neutralization and another filtration. The obtained polyether polyol was clear and had an unsaturation value below 20 mmol/kg.

### Example 2

A 3-litre reactor was charged with 1500 ml of water of 25 °C, containing 79.2 mmol of bariumhydroxide monohydrate. To this solution 52.8 mmol of phosphoric acid in 100 ml of water was added during 8 minutes.

For 2 hours the mixture was stirred at 25 °C and then filtered. After washing with 600 ml of water the mixture was filtered again and dried during 24 hours at 120 °C, yielding pure bariumphosphate.

For the activation of bariumphosphate, obtained as described above, a quantity of 65 g (108 mmol) of bariumphosphate was added at a temperature of 50 °C to a solution of 6.5 g of potassiumhydroxide (116 mmol) in 650 ml of water. The mixture was stirred at 50 °C during 2 hours. The mixture was filtered using a glass-filter and the filtrate was washed with water (3 times, each time with 200 ml of water), washed with tetrahydrofuran (3 times, each time with 200 ml of tetrahydrofuran) and dried in an oven under vacuum during 24 hours at 100 °C.

The activated pure bariumphosphate thus obtained, was used as catalyst for the preparation of polyether polyols, substantially as described in Example 1. The supply of propyleneoxide was adapted to yield a product with a targeted molecular weight of 3000 g/mol. The propoxylation time again was approximately 100 minutes, the total batch time was 3 hours.

### Example A (for comparison, not according to the invention)

Bariumphosphate was prepared, substantially as described in Example 2. However, no activation treatment was carried out. The obtained bariumphosphate was directly used as catalyst in the propoxylation process, substantially as described in Example 1, but carried out at a temperature of 150 °C. The propoxylation time was approximately 250 minutes. The propoxylation time contained an induction period of about 175 minutes. The total batch time was 8.9 hours.

## Claims

1. A process for the preparation of alkyleneoxide adducts of active hydrogen-containing organic compounds by reaction of a compound having a vicinal oxide group with a compound containing at least one active hydrogen atom, in the presence of a catalyst comprising bariumphosphate obtainable by an activation treatment comprising treating with an alkali hydroxide solution.

2. A process as claimed in claim 1, characterized in that the compound having a vicinal oxide group is an alkyleneoxide with 2 to 4 carbon atoms.

3. A process as claimed in claim 1 or 2, characterized in that the compound containing at least one active hydrogen atom is a di- or polyhydric alcohol or a glycolether.

4. A process as claimed in any of claims 1-3, characterized in that alkyleneoxide adducts are prepared having an adduct number in the range of 20 to 40.

5. A process as claimed in any of claims 1-4, characterized in that the activation treatment is performed during the preparation of the catalyst.

6. A process as claimed in claim 5, characterized in that the activation treatment includes contacting bariumphosphate, with an aqueous solution of an alkalihydroxide directly after its formation.

7. A process as claimed in claim 6, characterized in that an aqueous solution of sodium hydroxide is used.

8. A process as claimed in claim 6 or 7, characterized in that the amount of alkalihydroxide in the aqueous alkalihydroxide solution is selected such that activated bariumphosphate is obtained as a precipitate in an essentially neutral medium.

9. A process as claimed in any of claims 5-8, characterized in that the activated catalyst, before use, is washed with water, followed by a treatment with an organic solvent and dried.

10. A process as claimed in any one of claims 1-9, characterized in that propyleneoxide is reacted with a polypropylene glycol.

## Patentansprüche

1. Verfahren zur Herstellung von Alkylenoxidaddukten von aktiven Wasserstoff enthaltenden organischen Verbindungen durch Umsetzung einer Verbindung, die eine vicinale Oxidgruppe aufweist, mit einer Verbindung, die wenigstens ein aktives Wasserstoffatom enthält, in Anwesenheit eines Katalysators, der durch eine Aktivierungsbehandlung, die ein Behandeln mit einer Alkalihydroxidlösung umfaßt, erhältlich ist.

2. Verfahren nach Anspruch 1, dadurch gekennzeichnet, daß die Verbindung mit einer vicinalen Oxidgruppe ein Alkylenoxid mit 2 bis 4 Kohlenstoffatomen ist.

3. Verfahren nach Anspruch 1 oder 2, daurch gekennzeichnet, daß die wenigstens ein aktives Wasserstoffatom enthaltende Verbindung ein zweiwertiger oder mehrwertiger Alkohol oder ein Glykolether ist.

4. Verfahren nach einem der Ansprüche 1 bis 3, dadurch gekennzeichnet, daß Alkylenoxidaddukte hergestellt werden, die eine Adduktzahl im Bereich von 20 bis 40 aufweisen.

5. Verfahren nach einem der Ansprüche 1 bis 4, dadurch gekennzeichnet, daß die Aktivierungsbehandlung während der Katalysatorherstellung vorgenommen wird.

6. Verfahren nach Anspruch 5, dadurch gekennzeichnet, daß die Aktivierungsbehandlung ein Inkontaktbringen von Bariumphosphat mit einer wässrigen Lösung eines Alkalihydroxids unmittelbar nach der Bildung des Bariumphosphats einschließt.

7. Verfahren nach Anspruch 6, dadurch gekennzeichnet, daß eine wässrige Natriumhydroxidlösung eingesetzt wird.

8. Verfahren nach Anspruch 6 oder 7, dadurch gekennzeichnet, daß die Alkalihydroxidmenge in der wässrigen Alkalihydroxidlösung derart ausgewählt wird, daß das aktivierte Bariumphosphat als ein Niederschlag in einem im wesentlichen neutralen Medium erhalten wird.

9. Verfahren nach einem der Ansprüche 5 bis 8, dadurch gekennzeichnet, daß der aktivierte Katalysator vor seiner Verwendung mit Wasser gewaschen, anschließend mit einem organischen Lösungsmittel behandelt und getrocknet wird.

10. Verfahren nach einem der Ansprüche 1 bis 9, dadurch gekennzeichnet, daß Propylenoxid mit einem Polypropylenglykol umgesetzt wird.

## Revendications

1. Procédé de préparation d'adduits d'oxydes d'alkylène de composés organiques contenant de l'hydrogène actif par la réaction d'un composé possédant un radical oxyde vicinal avec un composé contenant au moins un atome d'hydrogène actif, en présence d'un catalyseur comprenant du phosphate de baryum pouvant être obtenu par un traitement d'activation comprenant le traitement par une solution d'un hydroxyde de métal alcalin.

2. Procédé suivant la revendication 1, caractérisé en ce que le composé possédant un groupe oxyde vicinal est un oxyde d'alkylène comportant de 2 à 4 atomes de carbone.

3. Procédé suivant la revendication 1 ou 2, caractérisé en ce que le composé contenant au moins un atome d'hydrogène actif est un glycoléther ou un alcool dihydroxylé ou polyhydroxylé.

4. Procédé suivant l'une quelconque des revendications 1 à 3, caractérisé en ce que l'on prépare des adduits d'oxydes d'alkylène possédant un indice d'adduit qui varie de 20 à 40.

5. Procédé suivant l'une quelconque des revendications 1 à 4, caractérisé en ce que l'on entreprend le traitement d'activation au cours de la préparation du catalyseur.

6. Procédé suivant la revendication 5, caractérisé en ce que le traitement d'activation comprend la mise en contact du phosphate de baryum avec une solution aqueuse d'un hydroxyde de métal alcalin, directement après sa formation.

7. Procédé suivant la revendication 6, caractérisé en ce que l'on utilise une solution aqueuse d'hydroxyde de sodium.

8. Procédé suivant la revendication 6 ou 7, caractérisé en ce que la quantité d'hydroxyde de métal alcalin dans la solution aqueuse d'hydroxyde de métal alcalin se choisit de façon que le phosphate de baryum activé soit obtenu sous la forme d'un précipité dans un milieu essentiellement neutre.

9. Procédé suivant l'une quelconque des revendications 5 à 8, caractérisé en ce qu'on lave le catalyseur activé, avant son emploi, avec de l'eau, puis on opère un traitement par un solvant organique et on le sèche.

10. Procédé suivant l'une quelconque des revendications 1 à 9, caractérisé en ce que l'on fait réagir de l'oxyde de propylène avec un polypropylèneglycol.
